# EUROPEAN PATENT APPLICATION

(11) **EP 1 188 379 A1**
(43) Date of publication of application: **20.03.2002**
(21) Application number: 00830632.6
(22) Date of filing: 18.09.2000
(51) Int. Cl.: A21C 9/04

(54) **Machine for metered distribution of food products on dough bases**

(71) Applicant: Comas S.p.a., 36030 Pievebelvicino (Vicenza) (IT)
(72) Inventor: Visona, Stefano, 36015 Schio, Vicenza (IT)
(74) Representative: Vannini, Mario

(57) **Abstract**

Machine for metered distribution of food products on dough bases, which comprises a conveyor belt (2) able to support a food product (3) such as, in particular, cheese in the form of small pieces, in a direction of feeding (X) towards a release station (4), combing means (6) for uniformly distributing the cheese (3) on the conveyor belt (2), conveying means (8) for transporting one or more parallel rows (9) of dough bases (10) underneath the release station (4); distribution means (11) for conveying amounts of cheese (3) from the release station (4) onto the dough bases (10). According to the invention, the machine also comprises weighing means (12) for intercepting the food product (3), located between the release station (4) and the distribution means (11). The weighing means (12) are intended to control the feeding movement of the conveyor belt (2) so as to produce precise amounts of food product (3) to be released to the distribution means (11).

## Description

### Field of the invention

The present invention relates to a machine for metered distribution of food products on dough bases.

In particular, the machine in question is intended to be used in the food industry in pizza production processes where it is required to distribute automatically predetermined quantities of products, for example cheese, on dough bases for pizza.

### Background art

According to the known art, machines for distributing metered quantities of food products, intended for pizza production plants, are generally arranged above a conveyor belt designed to support the dough bases and are generally mounted in series with one or more filling units.

In pizza production processes an increasingly important requirement is that of distributing the filling toppings as uniformly as possible on the dough bases.

This is mainly necessary in order to provide a high-quality end product in which substantially each part of the pizza is covered with uniform amounts of toppings. It should also be noted that the appearance of the pizza toppings is of fundamental importance, also from a commercial point of view, whence the reason for the continuous research aimed at improving the appearance of the said pizzas.

Moreover, since the toppings and especially the cheese may constitute an important part of the total cost of the pizza, it has also been necessary to perform fairly accurate metering thereof so that uniform quantities of product are deposited on the dough bases.

As is known, in the particular case where the topping consists of cheese, the difficulties encountered by machines currently used to perform distribution and metering thereof on the pizza dough bases are greater than those encountered with other topping ingredients and have not yet been entirely eliminated.

In fact, the cheese, which is generally supplied broken up (i.e. in the form of pieces of any shape and preferably, but not exclusively, in the form of cubes or strips), tends to stick together in the form of lumps of variable size which prevents correct metering and distribution thereof on the pizza dough bases.

At present, two different types of machine which are able to distribute metered quantities of cheese in the form of small pieces on pizza dough bases are known.

A first type of machine envisages dividing up the cheese to be distributed on the pizza among a plurality of individual weighing units where the various quantities of cheese are separately weighed and then combined together again in the best possible manner in order to form the desired amounts.

For this purpose, these machines generally use a large number of weighing units or load sensors (i.e. 10, 14, 16, 20 or more) and generally are also able to weigh several ingredients separately before combining them again in a single end product.

In other words, this first type of machine therefore solves the problem of metering the cheese by dividing up the quantity to be distributed on the pizza into several smaller quantities which, when suitably combined together again, produce the correct amount of cheese to be deposited on the pizza.

The main defect associated with this type of machine consists in its excessively high cost in particular when used in pizza production plants, should it have to be used solely for the weighing of metered quantities of cheese.

A second type of machine envisages the use of combing means designed to distribute the cheese uniformly on a conveyor belt, breaking it up into pieces so as to form a substantially continuous and uniform layer of cheese. The conveyor belt is then made to move forwards in successive steps so that, with each step, a predefined quantity of cheese is made to fall inside a conveying template. The pieces of cheese falling inside the template reach the dough base and are distributed on top of it. Advantageously the belt which supports the pizzas may move at a relative speed with respect to the template so as to allow better distribution of the cheese on the dough.

The main drawback of this type of machine consists in fact that the quantity of cheese which falls into the template and corresponds to a given feeding movement of the belt is not sufficiently precise and results in uneven metering of cheese among the various pizzas.

In fact, it often happens that the pieces of cheese are arranged differently along the conveyor belt so as to result in the distribution of an excessive quantity of cheese on some dough bases and, vice versa, the distribution of an inadequate quantity of cheese on other dough bases. This situation also depends on the fact that the pieces of cheese may stick together in the form of differently sized blocks when they are about to fall from the conveyor belt onto the dough base.

Obviously, a quantity of cheese on the pizza greater than the intended quantity results in excessive production costs since, as is known, the cost of the cheese constitutes a particularly significant portion of the total cost of the pizza. On the other hand, an inadequate quantity of cheese may result in the production of poor-quality pizzas.

### Summary of the invention

The main object of the present invention is to eliminate the drawbacks of the abovementioned known art by providing a machine for metered distribution of food products on dough bases, which allows food products to be arranged in uniformly metered quantities on dough bases in a simple and low-cost manner.

Another particular object of the present invention is to provide a simple and operationally entirely reliable machine for performing metered distribution.

These and other objects are achieved by a machine for metered distribution of food products on dough bases, which comprises: - at least one conveyor belt designed to support a food product in a direction of feeding towards a release station; - combing means designed to distribute uniformly the food product on the conveyor belt; - conveying means for transporting one or more parallel rows of dough bases underneath the release station; - distribution means designed to convey amounts of food product from the release station to the dough bases. According to the invention the machine in question is characterized in that it comprises weighing means for intercepting the food product, located between the release station and the distribution means, the abovementioned weighing means being designed to control the feeding movement of the conveyor belt so as to produce precise amounts of food product to be released to the distribution means.

As a result of this machine it is possible to distribute metered quantities of food products, and in particular cheese in the form of small pieces, on dough bases, in particular for pizza, in a low-cost and extremely precise manner.

### Brief description of the drawings

The technical features and advantages of the present invention, in accordance with the abovementioned objects, will be better understood from the appended claims and from the following detailed description provided with reference to the accompanying drawings which illustrate a purely exemplary non-limiting embodiment thereof and in which:
Fig. 1 shows in schematic form a side view of a first embodiment of the machine according to the present invention;
Fig. 2 shows in schematic form a side view of an enlarged detail of a second embodiment of the machine according to the present invention;
Fig. 3 shows in schematic form a side view of an enlarged detail of a third embodiment of the machine according to the present invention;

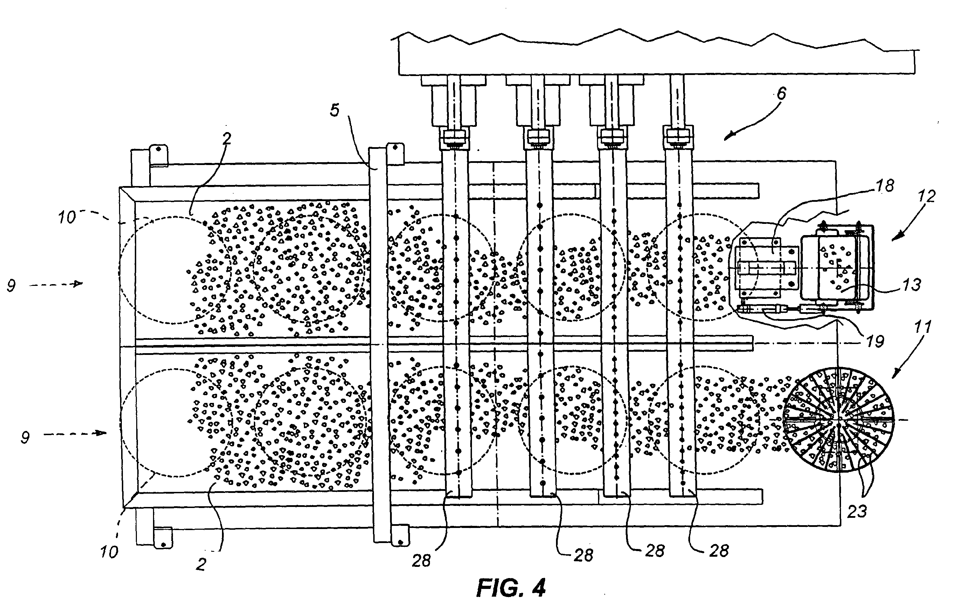

Fig. 4 shows a schematic plan view of the machine according to Fig. 1 with some parts removed so that others may be more clearly seen;

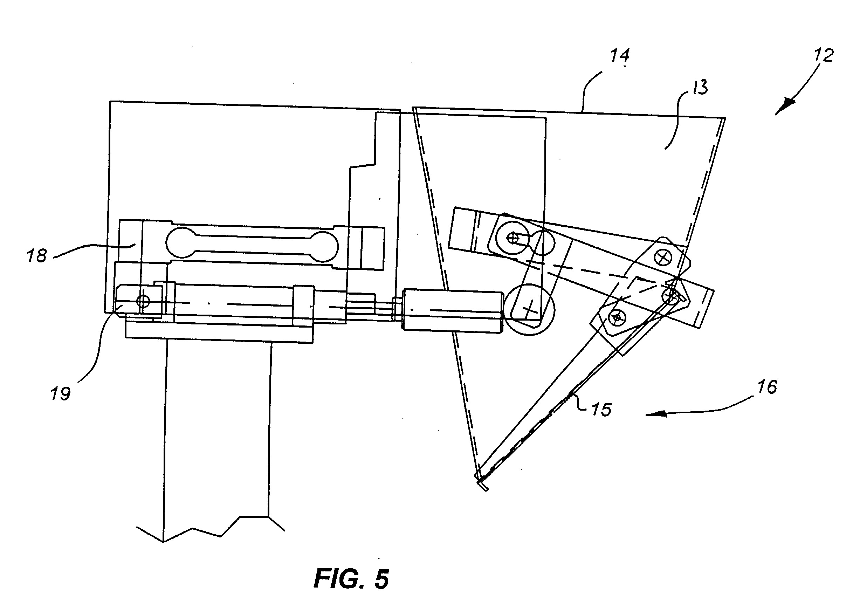

Fig. 5 shows an enlarged view of a detail of the machine in question, relating to the weighing means.

### Detailed description of a preferred example of embodiment

With reference to the accompanying drawings, 1 denotes in its entirety the machine for metered distribution of food products on dough bases according to the present invention.

This machine is advantageously suitable for installation in industrial plants for the production of pizzas, in particular for distributing precise amounts of cheese in the form of small pieces on top of pizza dough bases.

The machine comprises several conveyor belts 2 which are arranged parallel to each other and are able to support a food product 3 consisting preferably of cheese in the form of small pieces, in a direction of feeding X towards a release station indicated generically by 4 and described in detail below.

Below reference will be made in particular to the case where the food product consists of cheese, it being understood, however, that operation of the machine in question may also be envisaged for any other type of food product.

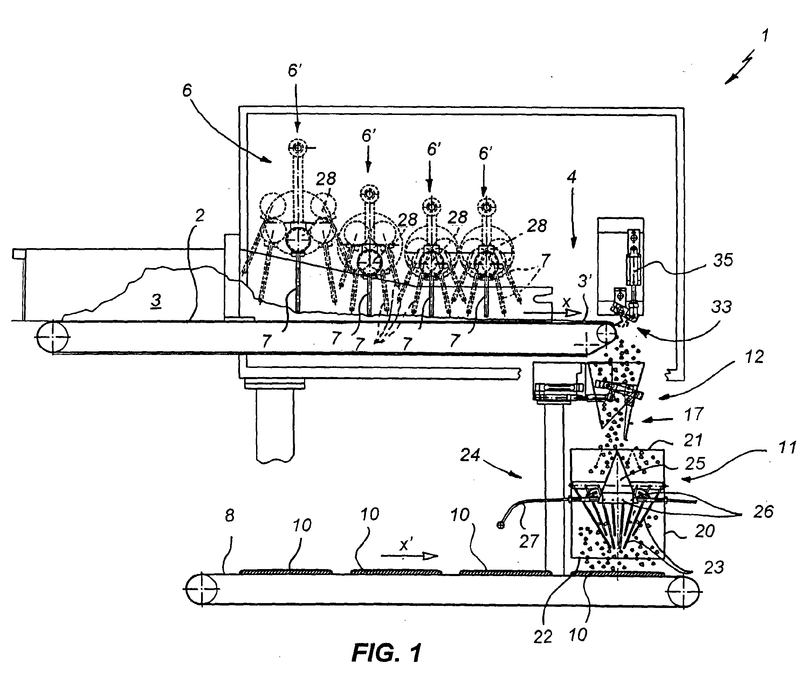

The conveyor belts 2 are supplied by a hopper 5 for loading the cheese 3, which supplies the conveyor belts 2 upstream of the release station 4, as schematically illustrated in Figs. 1, 2 and 3.

As can be seen in these figures, the cheese 3 leaving the hopper 5 accumulates so as to form mounds of cheese 3 which are then acted on by combing means 6 which flatten them out so as to distribute the cheese 3 uniformly on the surface of the conveyor belts 2.

These combing means 6 may be constructed in the form of several mechanisms for driving teeth 7, as illustrated in the examples of embodiment according to Figs. 1, 2 and 3 and as will be described below.

Obviously, other mechanical systems for driving the teeth 7 distributing the cheese 3, different from those illustrated in the accompanying figures, may also be envisaged, without thereby departing from the scope of protection of the present patent.

The machine 1 in question also comprises conveying means 8 for transporting one or more parallel rows 9 of pizza dough bases 10.

These conveying means 8 may advantageously consist of a motorised belt designed to transport the pizza bases 10 also through other processing units (not shown) of the pizza production plant, such as, for example, cooking units or filling units for depositing, for example, tomato sauce or other ingredients on the pizza dough base.

In a preferred embodiment of the present invention, the direction of feeding X' of the pizzas 10 arranged on the conveyor belt 8 will be parallel to the direction of feeding X of the cheese 3 arranged on the conveyor belts 2. The latter are moreover advantageously arranged above the conveyor belt 8 so that the release station is able to allow the metered amounts of cheese 3 to fall on top of the dough bases 10.

For this purpose, distribution means 11 are also provided, said means being able to convey the cheese 3 falling from the release station 4 on top of the dough bases 10 which, supported by the conveyor belt 8, pass underneath the said station 4.

According to the invention, the machine 1 in question also comprises weighing means 12 located between the release station 4 and the distribution means. These weighing means 12 intercept the cheese dropping from the release station 4 and control the feeding movement of the conveyor belts 2 so as to produce precise amounts of cheese 3 which must then be released to the distribution means 11.

In greater detail, in accordance with the example of embodiment illustrated in the accompanying figures, the weighing means 12 comprise a container 13 provided with an opening 14 designed to receive the cheese 3 from the release station 4 and a bottom member 15 movable between a closed position 16, where it retains the cheese inside the container 13 until the desired amount is reached, and an open position 17, where, once the quantity of accumulated cheese 3 has reached the weight of the predefined amount, it releases the abovementioned amount onto the dough base 10 by means of the distribution means 11.

Advantageously, the weighing means 12 comprise a load sensor 18 which supports the container 13 for weighing precise quantities of cheese 3, and first actuator means 19 (consisting for example of a pneumatic piston) for moving the bottom member 15 between the closed position 16 and the open position 17.

In accordance with a preferred embodiment of the present invention, the distribution means 11 are formed by a substantially cylindrical shaped tubular body 20 having an upper opening 21 for receiving the cheese 3 from the weighing means 12 and a bottom opening 22 for distributing the cheese 3 on the pizza dough base 10.

In order to separate the individual particles of cheese 3, favouring distribution thereof on the dough bases 10, rods 23 are advantageously provided inside the tubular body 20, said rods being directed in a substantially radial arrangement with the top ends fixed at regular distances along an internal circumference of the tubular body 20 and with the bottom ends arranged in an equidistant manner further down in the region of the central axis of the tubular body 20.

Obviously it will also be possible to envisage mounting, inside the tubular body 20, metal strips 20 (or other technically equivalent distribution elements) in place of the rods 23 in order to separate and distribute the individual pieces of cheese 3.

The uniform distribution of the particles of cheese 3 over the entire surface of the dough bases 10 is also favoured by the simultaneous presence of air blowing means 24 mounted inside the tubular body 20. In accordance with the example of embodiment illustrated in Fig. 1, the air blowing means 24 are formed by a conical element 25 fixed centrally inside the tubular body 20, with the top directed upwards, and peripherally provided with a plurality of air ejection nozzles 26 connected to air supply means 27.

The abovementioned combing means 6 have been shown by way of example in Figs. 1, 2 and 3 in three different embodiments.

In Fig. 1 they also comprise several combing units 6', each of which is provided with an eccentric shaft 28 mounted above the conveyor belts 2 transversely with respect to the direction of feeding X thereof and having a plurality of teeth 7 designed to provide a uniform layer 3' of cheese 3.

In accordance with this embodiment, the teeth 7, during the eccentric movement of the shaft 28, tend to be inclined a few degrees so as to favour distribution of the cheese. In the specific case of the example shown in Fig. 1, four combing units 6' have been provided, being arranged at different heights decreasing in the direction of movement of the conveyor belts 2 so as to form a layer of cheese 3' with an increasingly lower height.

Advantageously, the heights of the combing units are adjustable and for this purpose guides 29 for supporting the individual units 6' at different heights are provided.

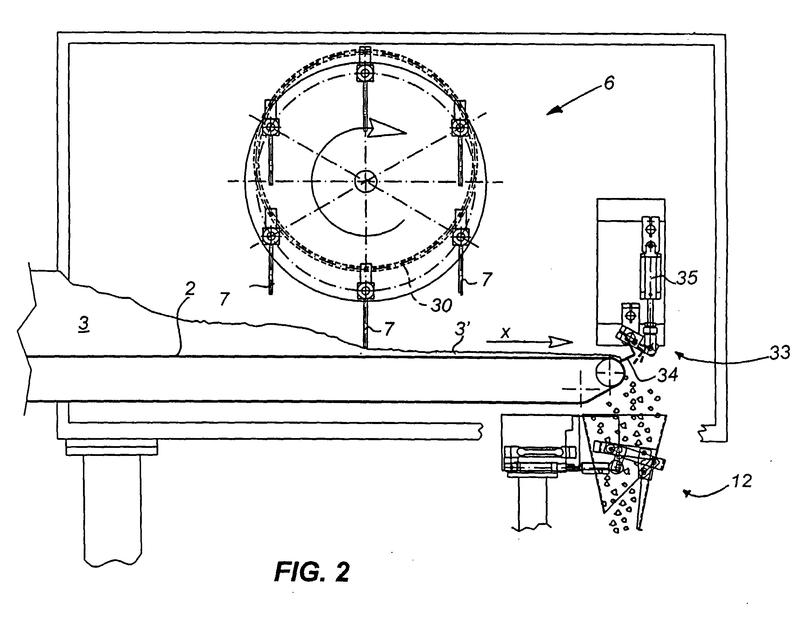

Alternatively, in the example of embodiment shown in Fig. 2, the teeth are driven within a cam 30 and remain substantially parallel to each other over the whole travel path.

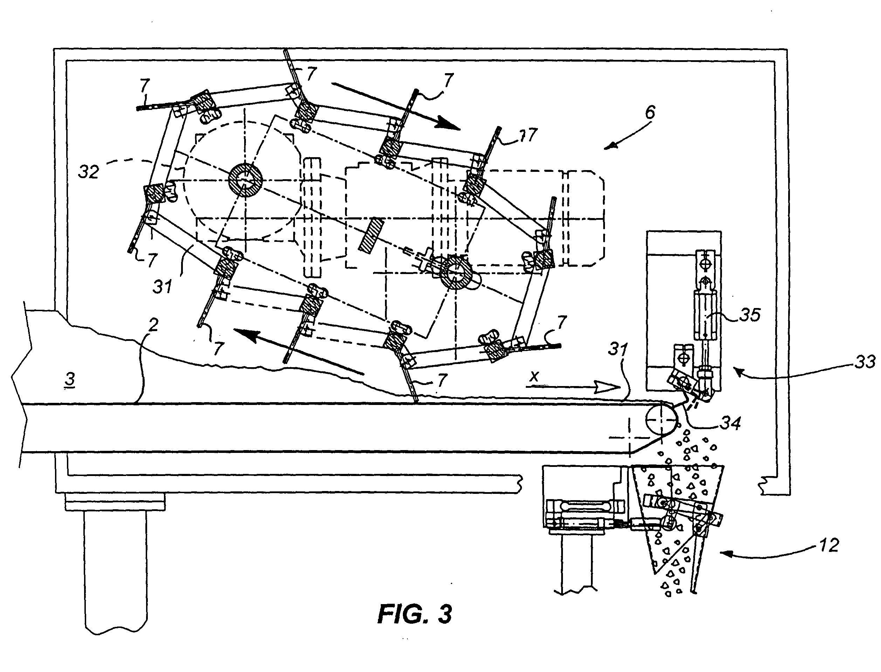

Finally, in the example shown in Fig. 3, the teeth 7 are mechanically joined to a guided chain 31 which is endlessly wound onto a motorised wheel 32 above the conveyor belts 2. In this case, the teeth 7 are inclined so as to ensure better distribution of the cheese 3 on the belts 2.

From an operational point of view, the machine 1 in question operates in the manner specified hereinbelow.

The cheese 3 deposited on the belts 2 by the hopper 5 is distributed by the combing means 6 so as to form a uniform layer 3' and at the same time is transported in the feeding direction X until it reaches the release station 4.

Simultaneously, an equal number of rows of pizza dough bases 10 supported by the conveyor belt 8 advance underneath the belts 2.

The movement of each belt 2 is controlled by a logic control unit associated with the weighing means 12. In this way, when the load sensor 18, which supports the container 13 associated with a corresponding conveyor belt 2, manages to measure a predefined mass of cheese, the load sensor itself sends a signal to the logic control unit which stops the belt 2 and opens the bottom 16 of the container 13 by means of activation of the first actuator means 19.

The precise amount of cheese 3 thus obtained falls inside the distribution means 11 which sprinkle the cheese 3 over the surface of the corresponding pizza dough base 10.

In order to stop instantaneously the supply of cheese 3 to the container 13 once the desired amount has been reached, stopping means 33 arranged opposite the release station 4 may be advantageously provided. These means are actuated by the weighing means 12, via the logic control unit, between an operative position, where they stop cheese being released from the conveyor belt 2, and a non-operative position, where they do not interfere with release of the cheese, allowing it to fall from the release station 4.

In accordance with the example in Fig. 1, the stopping means 33 comprise an intercepting member 34 which is moved by second actuator means 35 (consisting for example of a pneumatic piston) between the operative position, where this member 34 comes into contact against the belt 2 so as to stop the cheese from falling, and the non-operative position, where this member 34 allows the cheese inside the container 13 to fall.

The invention thus conceived therefore achieves the predefined objects.

Obviously the invention may also assume, during practical implementation thereof, forms and configurations different from those illustrated above without thereby departing from the present scope of protection defined by the appended claims.

Moreover, all the details may be replaced by technically equivalent elements, and the dimensions, shapes and materials used may be of any nature in accordance with requirements.

## Claims

1. Machine for metered distribution of food products on dough bases, comprising:
- at least one conveyor belt (2) designed to support a food product (3) in a direction of feeding (X) towards a release station (4);
- combing means (6) designed to distribute uniformly said food product (3) on said conveyor belt (2);
- distribution means (11) designed to convey amounts of food product (3) from said release station (4) to said dough bases (10),
**characterized in that** it comprises weighing means (12) for intercepting said food product (3), located between said release station (4) and said distribution means (11), said weighing means (12) being designed to control the feeding movement of said conveyor belt (2) so as to produce precise amounts of food product (3) to be released to said distribution means (11).

2. Machine according to Claim 1, **characterized in that** said weighing means (12) comprise at least one container (13) provided with an opening (14) for receiving said food product (3) from said release station (4), and at least one bottom member (15) movable between a closed position (16), where said bottom member (15) retains the food product (3) inside the container (13), and an open position (17), where said bottom member (15) releases weighed amounts of food product (3) onto said distribution means (11).

3. Machine according to Claim 2, **characterized in that** said weighing means (12) comprise at least one load sensor (18) supporting said container (13) for weighing measured quantities of food product (3).

4. Machine according to Claim 2, **characterized in that** said weighing means (12) comprise first actuator means (19) for moving said bottom member (15) between said closed position (16) and said open position (17).

5. Machine according to Claim 1, **characterized in that** said distributions means (11) comprise a tubular body (20) provided with at least one upper opening (21) for receiving said amounts of food product (3) from said weighing means (12), and at least one bottom opening (22) for distributing each of said amounts onto a corresponding dough base (10).

6. Machine according to Claim 5, **characterized in that** said tubular body (20) is provided internally with a plurality of rods (23) and/or metal strips in a substantially radial arrangement for ensuring the uniform distribution of said amounts of food product (3) falling from said weighing means (12) onto the whole surface of said dough bases (10).

7. Machine according to Claim 5, **characterized in that** said distribution means (11) comprise air blowing means (24) mounted inside said tubular body (20) for ensuring uniform distribution of said amounts of food product (3) falling from said weighing means (12) onto the whole surface of said dough bases (10).

8. Machine according to Claim 7, **characterized in that** said air blowing means (24) comprise at least one conical element (25) mounted concentrically with respect to the tubular body (10) and provided peripherally with a plurality of nozzles (26) for expelling the air supplied by air supply means (27).

9. Machine according to Claim 1, **characterized in that** said combing means (6) comprise one or more combing units (6'), each of which is provided with an eccentric shaft (28) mounted above said conveyor belt (2) transversely with respect to said direction of feeding (X) and having a plurality of teeth (7) designed to form a uniform layer (3') of food product (3) on the said conveyor belt (2).

10. Machine according to Claim 9, **characterized in that** said combing units (6') are arranged at different and/or adjustable heights decreasing in the direction of movement of said conveyor belt (2) for forming layers (3') of food product (3) with decreasing heights.

11. Machine according to Claim 9, **characterized in that** said teeth (7) remain substantially parallel to each other during the rotation of the respective eccentric shaft (28).

12. Machine according to Claim 1, **characterized in that** said combing means (6) comprise a chain (31) with a plurality of teeth (7) designed to rotate above said conveyor belt (2) so as to form a uniform layer (3') of food product (3) on the said conveyor belt (2).

13. Machine according to Claim 1, **characterized in that** said combing means (6) comprise a plurality of teeth (7) which are driven in a guided manner along a cam (30) above said conveyor belt (2) so as to form a uniform layer (3') of food product (3) on the said conveyor belt (2).

14. Machine according to Clam 1, **characterized in that** it comprises stopping means (33) arranged opposite said release station (4) and able to be operated by said weighing means (12) between an operative position, where they stop the release of food product (3) by said conveyor belt (2), and a non-operative position, where they do not interfere with the release of said food product (3).

15. Machine according to Claim 14, **characterized in that** said stopping means comprise at least one intercepting member (34) which is movable by second actuator means (35) between said operative position, where said intercepting member (34) comes into contact against said conveyor belt (2) in order to stop said food product (3) from falling, and a non-operative position, where said intercepting member (34) allows the food product (3) to fall towards said weighing means (12).

16. Machine according to Claim 1, **characterized in that** said food product (3) consists of cheese in the form of small pieces.

17. Machine according to Claim 1, **characterized in that** it is operationally associated with conveying means (8) designed to transport one or more parallel rows (9) of dough bases (10) underneath said release station (4) so as to receive said food product (3) from said distribution means (11).
